# EUROPEAN PATENT SPECIFICATION

(11) **EP 4 390 188 B1**
(45) Date of publication and mention of the grant of the patent: **03.09.2025**
(21) Application number: 23208739.5
(22) Date of filing: 09.11.2023
(51) Int. Cl.: F16J 15/3208, F16J 15/3224, F16J 15/3232, F16J 15/3236, F16J 15/3268, F16J 15/40

(54) **TILTABLE FLOATING LIP SEAL**
KIPPBARE, SCHWIMMENDE LIPPENDICHTUNG
JOINT À LÈVRE FLOTTANTE INCLINABLE

(30) Priority: 22.12.2022 US 202263434868 P
(43) Date of publication of application: 26.06.2024
(73) Proprietor: Flowserve Pte. Ltd., Singapore 637345 (SG)
(72) Inventor: Gabra, Bassem, Thornton, PA (US); Taylor, Joel, League City, TX (US); Owens Jr., Glenn Robert, Kalamazoo, MI (US); Fox, Matthew T., Marshall, MI (US); Andres, Todd T., Sparta, MI (US)
(74) Representative: Petraz, Gilberto Luigi

(56) References cited:
- EP-A1- 0 439 676
- EP-A1- 2 385 167
- WO-A1-2016/120556
- CN-U- 216 343 911
- DE-C- 839 651

## Description

### RELATED APPLICATIONS

This application claims the benefit of U.S. Provisional Application No. 63/434,868, filed December 22, 2022.

### FIELD OF THE INVENTION

The invention relates to lip seals, and more particularly, to floating lip seals.

### BACKGROUND OF THE INVENTION

There are many approaches for forming a seal between a stationary housing and a rotating shaft that extends from the environment, through a cylindrical "housing bore" provided in the housing, and into a sealed volume within the housing. For some applications, the rotating shaft may be supported by bearings on both sides of the seal, so that the shaft is held rigidly in coaxial alignment with the housing bore and is subject to almost no vibration or radial deflection. In other applications, the shaft may be subject to at least a small degree of vibration and radial deflection.

Lip seals can be an excellent approach for forming a seal with a rotating shaft, especially when there will be axial movement of the shaft, or when a certain degree of radial vibration of the shaft must be tolerated. In a lip seal, one or more seal rings surround the shaft and are sealed to a stationary housing. Each of the seal rings includes one or more flexible annular "lips" that extend radially inward and then axially forward or backward to form a seal with the shaft as it rotates. The flexible lips exert a spring-like tension radially inward toward the rotating shaft, such that, in some implementations, the lips form a direct contact seal with the shaft. In other implementations, a buffer fluid is introduced to either press the lips more firmly against the shaft, or to slightly lift the lips away from the shaft, thereby reducing frictional wear while allowing only a minute quantity of the buffer fluid to leak between the lips and shaft into the sealed volume and/or into the environment.

In some applications where relatively little radial motion or vibration of the shaft is expected, a "fixed" lip seal can be implemented. In a fixed lip seal, the seal ring or rings are mechanically fixed in position relative to the housing, and are maintained in coaxial alignment with the housing bore, such that any radial vibrations of the shaft are accommodated by a slight flexing of the seal lips. An oil seal is described for example in document EP0439676A1.

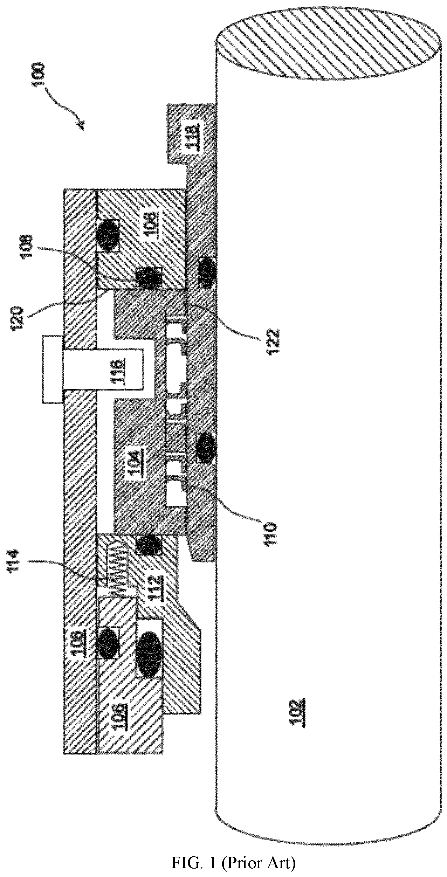

With reference to Fig. 1, in other applications where larger radial vibrations or deflections of the shaft **102** are anticipated, a radially "floating" lip seal **100** can be implemented. In the illustrated example, a single seal ring **104** is sealed to radial walls **120** of the housing **106** by "rolling" O-ring seals **108** that permit the seal ring **104** and lips **110** to be deflected radially, thereby accommodating larger radial deflections of the shaft **102.** A plurality of ring extensions **122** limit the degree to which radial displacements of the shaft **102** are able to deform the lips **110,** so that larger radial shaft displacements must be accommodated by radial displacements of the seal ring as enabled by the rolling O-ring seals **108.**

In the illustrated example, tension is maintained on the rolling O-ring seals **108** by an axially movable gland **112** that is pushed toward the seal ring **104** by a spring **114.** Some of the lips **110** in the illustrated example are directed radially inward and axially to the left, while others of the lips **110** are directed radially inward and to the right. A port **116** is provided through which a buffer fluid, such as nitrogen gas, can be introduced between complementary pairs of lips **110** to reduce wear.

In Fig. 1, the lips **110** form a lip seal with a collar **118** that is fixed and sealed to the shaft **102.** It will be understood that references herein to lips forming a seal with "the shaft" generically include seals to the shaft via intermediate structures such as the collar **118** of Fig. 1. It should also be noted that Fig. 1 is a simplified illustration in which some details, such as bolts that fix some of the elements to each other and small passages or pores through which the buffer fluid would flow, have been omitted for clarity of illustration.

While radially floating lip seals such as Fig. 1 can be effective for some applications, they can be problematic for other applications, including some implementations of cantilever rotating shafts, i.e. shafts that are supported on only one side of the seal. One example is a shaft that enters vertically into a sealed volume and terminates in a mixing element that is configured to agitate a mixture within the volume.

Because they are supported on only one side of a seal, cantilever shafts can be subject to significant radial displacements within the seal during operation, as well as significant tilting of the shaft axis, which results in misalignments between the longitudinal axis of the shaft and the longitudinal axis of the housing bore through which the shaft extends. These axial misalignments can lead to leakage of fluids past the lip seals, due to simultaneous over-compression of a portion of each lip seal accompanied by under-compression of an opposing portion of each lip seal. It can therefore be necessary in some cases to require that the seal itself resist and limit such movements of the shaft by bearing some of the shaft load. Essentially, the floating lip seal in such cases effectively functions as an additional bearing. This approach can lead to increased cost and/or wear of the lip seal.

What is needed, therefore, is a lip seal that can accommodate significant radial deflections of a rotating shaft, as well as misalignments between the shaft and the housing bore through which the shaft extends.

EP0439676A1 discloses a tiltable lip seal according to the preamble of claim 1.

### SUMMARY OF THE INVENTION

The present invention is a lip seal that can accommodate significant radial deflections of a rotating shaft, as well as misalignments between the shaft and the housing bore through which the shaft extends.

More specifically, the present invention is a "tilting" lip seal that includes a seal ring assembly comprising at least one seal ring. One or more radial lips extend inward from the seal ring assembly and form a seal with the shaft. In addition, a pair of flexible axial arms extend longitudinally away from opposing sides of the seal ring assembly and form a seal with the housing. Flexing of the axial arms thereby enables the seal ring assembly to be displaced radially, while compression and expansion of the axial arms enables the seal ring to tilt relative to the housing bore, so that the seal ring assembly can remain co-axial with the shaft, even when the shaft deviates from being co-axial with the housing bore.

In embodiments, the axial arms of the present invention function as axial lips that form lip seals with the housing. In some of these embodiments, the axial lips are sufficiently elastic by themselves to maintain a contact seal with radial housing walls even when the seal ring is tipped. In other embodiments, the axial lips are energized against the radial walls of the housing by annular "U" springs that are inserted into a space or "seat" between the axially directed lips and the seal ring assembly. In these embodiments, the axial lips extend axially from the seal ring assembly toward the radial walls, and then extend radially in parallel with the radial walls far enough to provide the U-shaped "seats" into which the U springs are inserted between the axial lips and the seal ring assembly. Each of the annular U-springs includes at least one side that is circumferentially "petalized," i.e. divided into a plurality of fingers or "petals" that extend radially outward, such that each "petal" can be flexed as much or as little as needed to main contact between that portion of the axial lip and the vertical housing wall.

In various embodiments, the radial lips are integral with the seal rings, and in some embodiments the axial lips are integral with the seal rings.

In other embodiments, distal ends of the axial arms are fixed to the housing, for example by being clamped between elements of the housing. In these embodiments, the distal ends of the axial arms remain fixed in location, while both radial displacements and axial tilting of the seal ring assembly are accommodated by flexing of the axial arms.

The seal ring assembly includes a plurality of seal rings that are fixed to each other.

Embodiments include a series of more than one radial lip extending inward from the seal ring assembly. In some of these embodiments the lips are configured, as the pressure of a sealed process fluid increases, to allow a small amount of the process fluid to penetrate past at least one of the radial lips in the series, while leakage into the environment is prevented by a subsequent radial lip in the series. According to this approach, the radially inward force that must be exerted by each of the radial lips against the shaft is reduced, because the pressure of the process fluid is reduced as it penetrates past each of the radial lips, so that it is only necessary for the final radial lip in the series to exert sufficient inward force to contain the residual pressure of any process fluid that is able to penetrate past the other radial lips. As a result, the friction and wear of the radial lips is reduced.

Various embodiments further include a port and associated passages that enable a buffer fluid to be injected into the seal behind the radial lips, such that a small amount of the buffer fluid flows between the lips and the shaft into the sealed volume and/or environment, thereby lifting the radial lips slightly away from the shaft, thereby reducing wear. In some of these embodiments where a series of more than one radial lip extends inward from the seal ring assembly, the radial lips are configured to exert different amounts of radial force toward the shaft, thereby enabling the buffer fluid to penetrate past all of the radial lips, despite the reduction in the pressure of the buffer fluid that is induced by each successive radial lip in the series.

The present invention is a tiltable lip seal according to appended claims that includes a stationary housing penetrated by a bore having a longitudinal bore axis, a rotatable shaft penetrating said bore, said rotatable shaft having a longitudinal shaft axis, a seal ring assembly coaxially surrounding the rotating shaft, at least one radial lip extending radially inward from the seal ring assembly and configured to form a seal between the seal ring assembly and the shaft, and a pair of axial arms extending from opposing axial ends of the seal ring assembly and forming a seal between the seal ring assembly and the housing. Radial displacement of the seal ring assembly and of the radial lips and axial arms is enabled by at least one of flexing of the axial arms and sliding of the axial arms against the housing. Compression of portions of said axial arms and expansion of opposing portions of said axial arms enables the seal assembly to remain coaxial with and sealed to the shaft when the shaft axis is not aligned with the bore axis.

In some embodiments, the seal ring assembly is sandwiched between a proximate pair of annular radial walls of said housing, and the axial arms are axial lips that form lip seals with the radial walls of the housing. In some of these embodiments, the axial arms are axial extensions of the seal ring assembly, or the axial arms are included in end rings that form axial lip seals with both the seal ring assembly and with annular radial walls of the housing. In any of these embodiments, the axial lips can be maintained in sealing contact with the annular radial walls of the housing due to elasticity of the axial lips. Or, the embodiment can further comprise a pair of springs cooperative with the pair of axial lips and configured to press the axial lips into contact with the annular radial walls of the housing. In some of these embodiments, the springs are canted coil springs, or petal springs, which can be petalized on only one side thereof or on opposing sides thereof.

In other embodiments, distal ends of the axial arms are fixed to the housing and remain fixed in location, such that both radial displacements and axial tilting of the seal ring assembly are accommodated by flexing of the axial arms. In some of these embodiments, the distal ends of the axial arms are fixed to the housing by being clamped between elements of the housing. In any of these embodiments, the axial arms can be axial extensions of the seal ring assembly.

The seal ring assembly includes a plurality of seal rings fixed and sealed to each other.

In any of the above embodiments, each of the radial lips can be formed in a separate lip module, each of the lip modules being separately sealed to the seal ring assembly.

In any of the above embodiments, the at least one radial lip can include a plurality of radial lips. In some of these embodiments, at least two of the radial lips extend axially in the same direction. In any of these embodiments, at least two of the radial lips can extend in opposite axial directions.

Any of the above embodiments can further comprise a buffer fluid port configured to enable introduction of a buffer fluid into the lip seal. In some of these embodiments, the lip seal is configured to cause a pressure of the buffer fluid to increase a radially inward force applied by at least one of the axial lips toward the shaft. And in any of these embodiments, the lip seal can be configured to cause small amounts of the buffer fluid to pass between the shaft and at least one of the radial lips, thereby lifting the radial lip away from direct contact with the shaft.

The features and advantages described herein are not all-inclusive and, in particular, many additional features and advantages will be apparent to one of ordinary skill in the art in view of the drawings, specification, and claims. Moreover, it should be noted that the language used in the specification has been principally selected for readability and instructional purposes, and not to limit the scope of the inventive subject matter, which is defined by the claims.

### BRIEF DESCRIPTION OF THE DRAWINGS

Fig. 1 is a cross-sectional view of a floating lip seal of the prior art;
Fig. 2 is a sectional view, drawn to scale, of a tilting lip seal oriented vertically in an embodiment of the present invention where the axial arms of the seal assembly form radially slidable axial lips seals with radial walls of the housing;
Fig. 3 is a closer sectional view, drawn to scale, of the embodiment of Fig. 2;
Fig. 4 is an even closer sectional view, drawn to scale, of an embodiment similar to Fig. 2 but including an annular petalized spring, the seal being oriented horizontally;
Fig. 5 is a sectional view similar to Fig. 4, drawn to scale, but shown with the rotating shaft tilted out of alignment with the housing bore;
Fig. 6 is a perspective view of the petalized spring of Figs. 4 and 5;
Fig. 7 is a sectional view, drawn to scale, of an embodiment of the present invention in which the distal ends of the axial arms are fixed and sealed to the housing;
Fig. 8A is a sectional view, drawn to scale, of an embodiment similar to Fig. 4, but in which each of the radial lips is included in a separate lip module that is fixed and sealed to the seal ring;
Fig. 8B is a sectional view, drawn to scale, of an embodiment similar to Fig. 8A;
Fig. 9A is a sectional view, drawn to scale, of an embodiment in which the axial lips are included in separate end rings that seal both to the seal ring and to the axial housing walls;
Fig. 9B is a sectional view, drawn to scale, of one of the end rings of Fig. 9A;
Fig. 10A is a perspective sectional view, drawn to scale, of a seal ring assembly in an embodiment that is similar to the embodiment of Fig. 9A, except that the assembly includes only one seal ring, and all of the lips are angled in the same axial direction;
Fig. 10B is a top view, drawn to scale, of the seal ring assembly of Fig. 10A; and
Fig. 10C is a sectional view, drawn to scale, of the seal ring assembly of Fig. 10A, with the section taken along the plane indicated in Fig. 10B.

### DETAILED DESCRIPTION

The present invention is a lip seal that can accommodate significant radial deflections of a rotating shaft, as well as misalignments between the shaft and the housing bore through which the shaft extends.

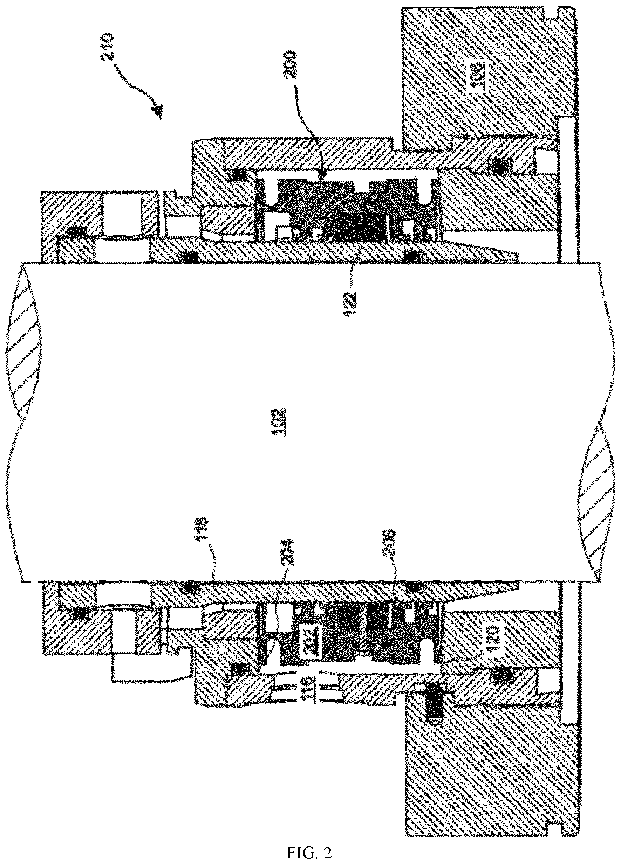

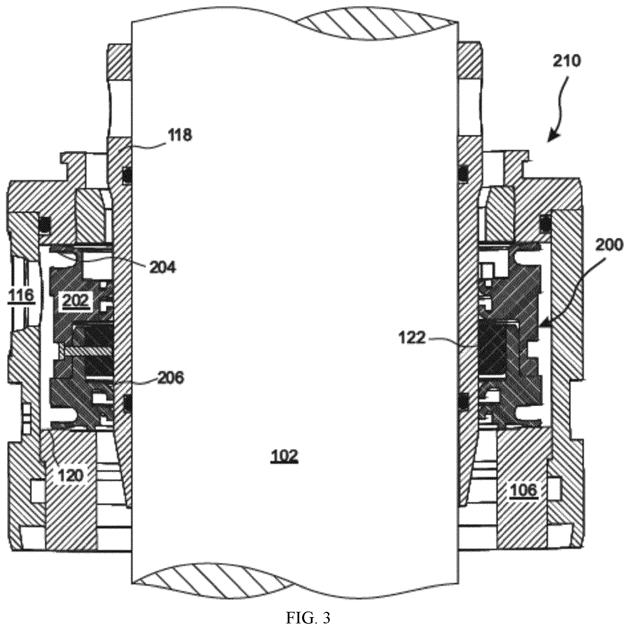

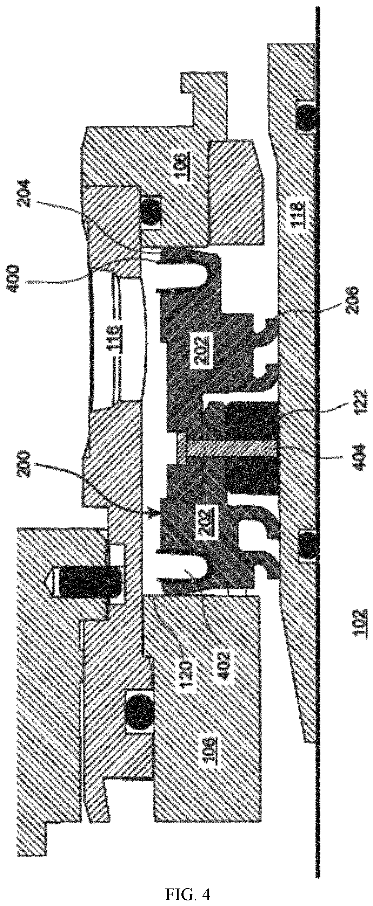

More specifically, with reference to Figs. 2-4, the present invention is a "tilting" lip seal **210** that includes a seal ring assembly **200** comprising at least one seal ring **202.** Fig. 2 is a sectional view of the complete seal **210** in an embodiment, oriented vertically. Fig. 3 is a closer sectional view of a portion of the same embodiment, and Fig. 4 is an even closer cross-sectional view of a smaller portion of the same embodiment, oriented horizontally.

According to the present invention, one or more radial lips **206** extend inward from the seal ring assembly **200** and form a seal with the shaft **102.** In the illustrated embodiments, the seal with the shaft **102** is formed via a collar **118** that surrounds and is sealed to the shaft **102.** In addition, a pair of flexible axial arms **204** extend longitudinally away from opposing sides of the seal ring assembly **200** and form a seal with the housing.

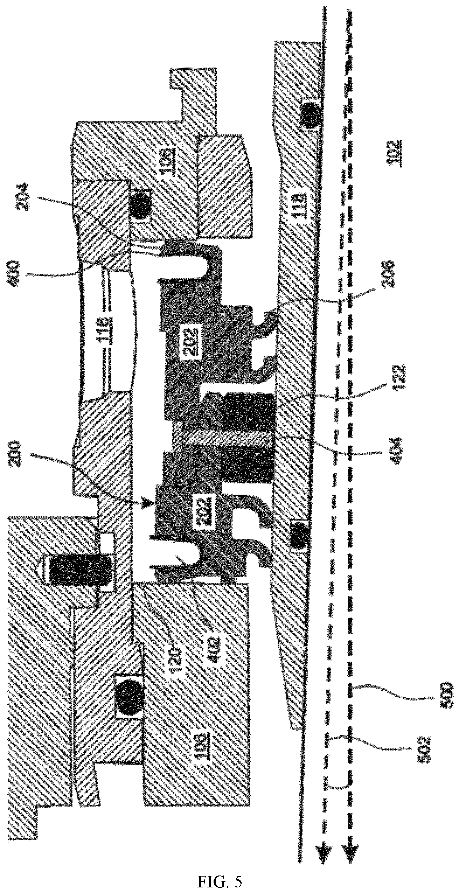

In the embodiment of Figs. 2-5, the axial arms **220** function as axial lips **220** that form lip seals with radial walls of the housing. With reference to Fig. 5, radial sliding of the axial lips **204** along the radial walls **220** of the housing thereby enables the seal ring assembly **200** with its associated lips **206, 204** to be displaced radially, while compression and expansion of the axial lips **204** enables the seal ring assembly **200** and lips **206, 204** to tilt relative to the housing bore, so that the longitudinal axis **500** of the seal ring assembly **200** can remain aligned with the longitudinal axis **502** of the shaft **102,** even when the longitudinal axis **502** of the shaft **102** deviates from being co-axial with the longitudinal axis **500** of the housing bore.

In the embodiment of Figs. 2-3, the axial lips **204** of the illustrated embodiment are sufficiently elastic by themselves to maintain a contact seal with the axial housing walls **120** even when the seal ring assembly **200** is tipped. In the embodiment of Figs. 4-5, the axial lips **204** are energized against the radial walls **120** of the housing **106** by annular "U" springs **400** that are inserted into a space or "seat" **402** between the axially directed lips **204** and the seal ring assembly **200.** In these embodiments, the axial lips **204** extend axially from the seal ring assembly **200** toward the radial walls **120,** and then extend radially in parallel with the radial walls **120** far enough to provide the U-shaped "seats" **402** into which the U springs **400** are inserted between the axial lips **204** and the seal ring assembly **200.**

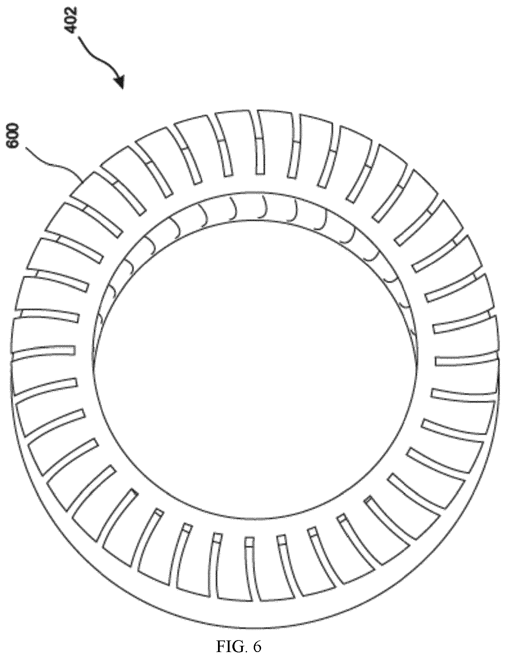

With reference to Fig. 6, each of the annular U-springs **400** includes at least one side that is circumferentially "petalized," i.e. divided into a plurality of fingers or "petals" **600** that extend radially outward, such that each "petal" **600** can be flexed as much or as little as needed to main contact between that portion of the axial lip **204** and the vertical housing wall **120.**

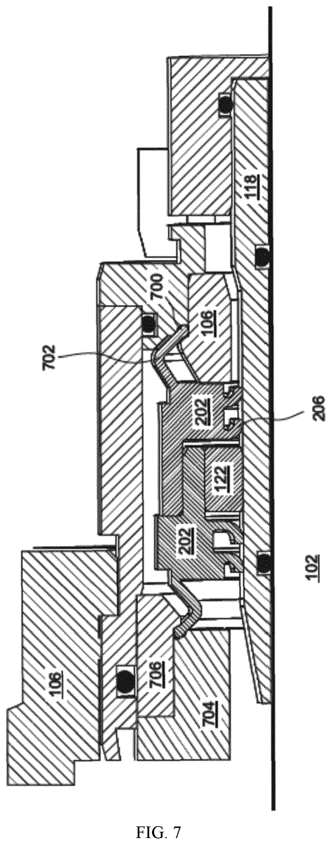

With reference to Fig. 7, in other embodiments distal ends **700** of the axial arms **702** are fixed to the housing **106,** for example by being clamped between elements **704, 706** of the housing **106.** In these embodiments, the distal ends **700** of the axial arms **702** remain fixed in location, while both radial displacements and axial tilting of the seal ring assembly **200** are accommodated by flexing of the axial arms **702.** In the embodiment of Fig. 7, the distal ends **700** of the axial arms **702** are rounded, and are compressed between the elements **704, 706** of the housing in a manner similar to an O-ring seal.

In some embodiments, the seal ring assembly **200** includes only one seal ring. In the embodiment of Figs. 2-7, the seal ring assembly **200** includes a plurality of seal rings **202** that are fixed to each other. In the illustrated embodiments, the seal ring assembly **200** comprises two seal rings **202** and a ring "bearing" **122,** all of which are fixed together by bolts **404.** The ring bearing ensures that the seal ring **200** assembly is displaced radially along with the shaft **102,** without undue flexing of the radial lips **206.**

The embodiment of Figs. 2-5 further includes a port **116** and associated passages (not shown) that enable a buffer fluid to be injected into the seal **210** behind the radial lips **206,** such that a small amount of the buffer fluid flows between the radial lips **206** and the shaft **102** into the sealed volume and/or environment, thereby lifting the radial lips **206** slightly away from the shaft **102,** thereby reducing wear. In some of these embodiments, the radial lips **206** are configured to exert different amounts of radial force toward the shaft **102,** thereby enabling the buffer fluid to penetrate past all of the radial lips **206,** despite the reduction in the pressure of the buffer fluid that is induced by each successive radial lip **206** in the series.

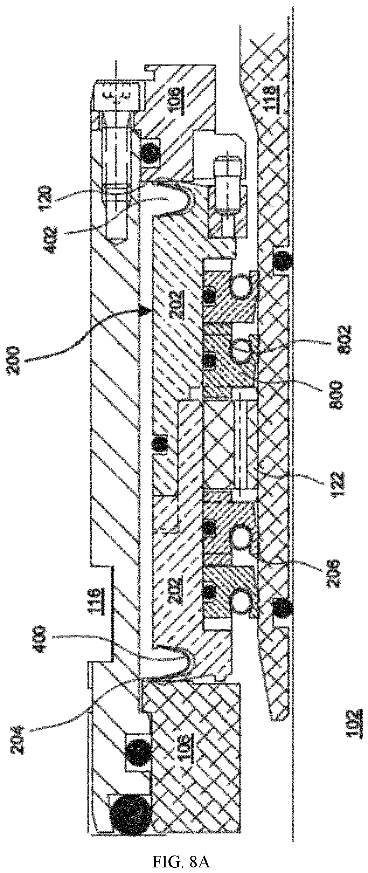

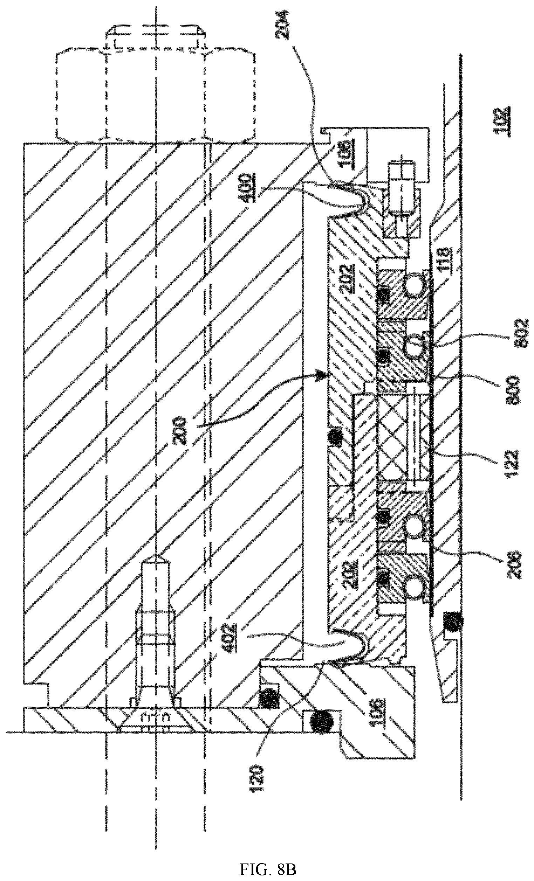

In the embodiments of Figs. 2-7, the radial lips **206,** and also the axial arms **204,** are integral with the seal rings **202.** Figs. 8A and 8B are sectional views of two embodiments in which the radial lips **206** are formed in lip modules **800** that are separate from, but sealed to, the seal rings **202.** In these embodiments, canted springs **802** are included to provide additional tension between the radial lips **206** and the collar **118.**

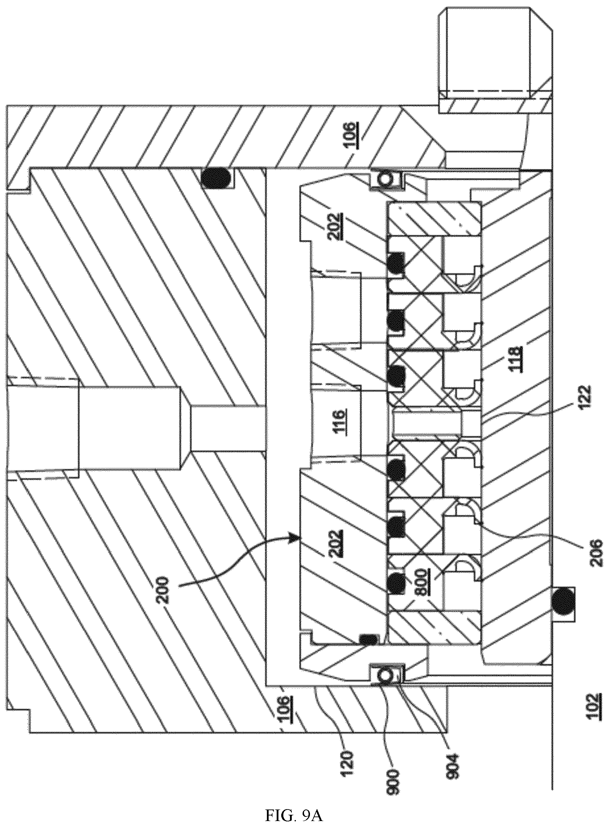

Fig. 9A is a sectional view of an embodiments in which neither the radial lips **206** nor the axial lips **900** are integral with the seal rings **202.** In the illustrated embodiment, the radial lips **206** are formed in separate lip modules **800,** similar to Figs. 8A and 8B. In addition, the axial lips are formed in separate end rings **900** that are installed within grooves **904** at the axial ends of the seal assembly **200.**

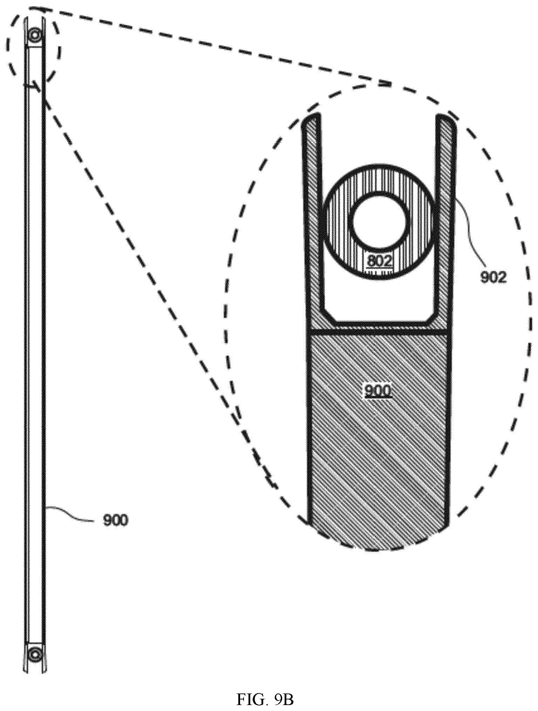

Fig. 9B is a sectional side view of one of the end rings **900** of Fig. 9A. It can be seen in the expanded view of the top end of the end ring **900** that a pair of radially extending walls **902** extend radially outward from the end ring **900.** The radially extending walls are spaced apart from each other and function as axial lips **204** that are pressed outward by a canted spring **802.** When the end rings **900** are assembled with the ring assembly **200,** as shown in Fig. 9A, the radially extending walls **902** are pressed outward by the canted spring **802** and form lip seals both with the vertical wall **120** of the housing and with the seal ring **202.** It will be understood that similar embodiments include other mechanisms for pressing the radially extending walls **902** outward, which can include an O-ring or other elastomeric device, a U-shaped spring **400** as discussed above, or a shaping and elasticity of the radially extending walls **902** themselves.

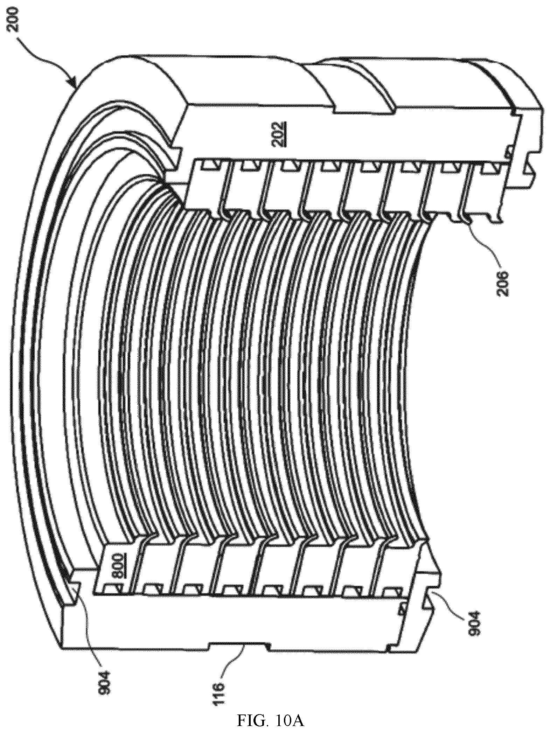

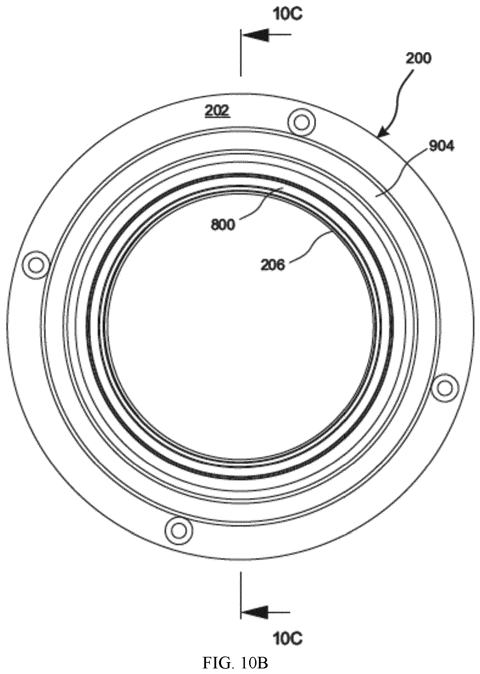

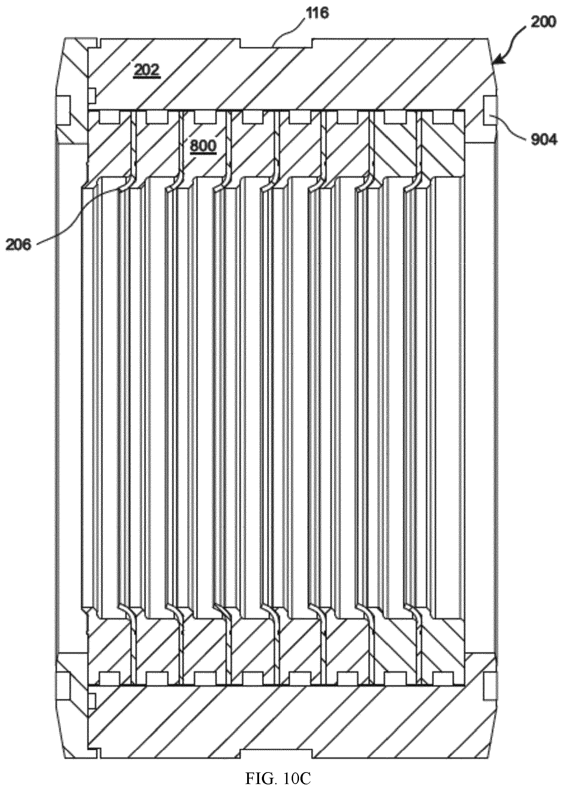

Fig. 10A is a perspective sectional view of a seal ring assembly **200,** shown without the end rings **900,** in an embodiment that is similar to the embodiment of Fig. 9A, except that the assembly **200** includes only one seal ring **202,** and all of the lips **206** are angled in the same axial direction. Fig. 10B is a top view of the seal ring assembly **200** of Fig. 10A; and Fig. 10C is a sectional view of the seal ring assembly **200** of Fig. 10A, with the section taken along the plane indicated in Fig. 10B.

It will be noted that all of the illustrated embodiments include a series of more than one radial lip **206** extending inward from the seal ring assembly **204.** In some of these embodiments the radial lips **206** are configured, as the pressure of a sealed process fluid increases, to allow a small amount of the process fluid to penetrate past at least one of the radial lips **206** in the series, while leakage into the environment is prevented by a subsequent radial lip **206** in the series. According to this approach, the radially inward force that must be exerted by each of the radial lips **206** against the shaft **102** is reduced, because the pressure of the process fluid is reduced as it penetrates past each of the radial lips **206,** so that it is only necessary for the final radial lip **206** in the series to exert sufficient inward force to contain the residual pressure of any process fluid that is able to penetrate past the other radial lips **206.** As a result, the friction and wear of the radial lips **206** is reduced.

The foregoing description of the embodiments of the invention has been presented for the purposes of illustration and description. Each and every page of this submission, and all contents thereon, however characterized, identified, or numbered, is considered a substantive part of this application for all purposes, irrespective of form or placement within the application. This specification is not intended to be exhaustive or to limit the invention to the precise form disclosed. Many modifications and variations are possible in light of this disclosure.

Although the present application is shown in a limited number of forms, the scope of the invention is not limited to just these forms, but is amenable to various changes and modifications. The disclosure presented herein does not explicitly disclose all possible combinations of features that fall within the scope of the invention, as defined by the claims. The features disclosed herein for the various embodiments can generally be interchanged and combined into any combinations that are not self-contradictory without departing from the scope of the invention. In particular, the limitations presented in dependent claims below can be combined with their corresponding independent claims in any number and in any order without departing from the scope of this disclosure, unless the dependent claims are logically incompatible with each other.

## Claims

1. A tiltable lip seal (210) comprising:
a stationary housing (106) penetrated by a bore having a longitudinal bore axis (500);
a rotatable shaft (102) penetrating said bore, said rotatable shaft having a longitudinal shaft axis (502);
a seal ring assembly (200) coaxially surrounding the rotating shaft (102);
at least one radial lip (206) extending radially inward from the seal ring assembly (200) and configured to form a seal between the seal ring assembly (200) and the shaft (102); and
a pair of axial arms (204, 702) extending from opposing axial ends of the seal ring assembly (200) and forming a seal between the seal ring assembly (200) and the housing (106);
radial displacement of the seal ring assembly (200) and of the radial lips (206) and axial arms (204, 702) being enabled by at least one of flexing of the axial arms and sliding of the axial arms against the housing (106); and
compression of portions of said axial arms (204, 702) and expansion of opposing portions of said axial arms enabling the seal assembly (200) to remain coaxial with and sealed to the shaft (102) when the shaft axis (502) is not aligned with the bore axis (500),
**characterized in that** said seal ring assembly (200) comprises a plurality of seal rings (202) fixed and sealed to each other.

2. The lip seal (210) of claim 1, wherein the seal ring assembly (200) is sandwiched between a proximate pair of annular radial walls (120) of said housing (106), and wherein the axial arms (204) are axial lips (204) that form lip seals with the radial walls of the housing.

3. The lip seal (210) of claim 2, wherein the axial lips (204) are included in end rings that form axial lip seals with both the seal ring assembly (200) and the annular radial walls (120) of the housing (106).

4. The lip seal (210) of claim 2 or claim 3, wherein the axial lips (204) are maintained in sealing contact with the annular radial walls (120) of the housing (106) due to elasticity of the axial lips.

5. The lip seal (210) of any of claims 2 - 4, further comprising a pair of springs (400) cooperative with the pair of axial lips (204) and configured to press the axial lips into contact with the annular radial walls (120) of the housing (106).

6. The lip seal (210) of claim 5, wherein the springs (400) are canted coil springs.

7. The lip seal (210) of claim 5, wherein the springs (400) are petalized U-springs.

8. The lip seal (210) of claim 1, wherein distal ends (700) of the axial arms (702) are fixed to the housing (106) and remain fixed in location, and wherein both radial displacements and axial tilting of the seal ring assembly (200) are accommodated by flexing of the axial arms.

9. The lip seal (210) of any preceding claim, wherein the axial arms (204, 702) are axial extensions of the seal ring assembly (200).

10. The lip seal (210) of any preceding claim, wherein each of the radial lips (206) is formed in a separate lip module (800), each of the lip modules being separately sealed to the seal ring assembly (200).

11. The lip seal (210) of any preceding claim, wherein the at least one radial lip (206) includes a plurality of radial lips.

12. The lip seal (210) of any preceding claim, further comprising a buffer fluid port configured to enable introduction of a buffer fluid into the lip seal.

13. The lip seal (210) of claim 12, wherein the lip seal is configured to cause a pressure of the buffer fluid to increase a radially inward force applied by at least one of the axial lips (204) toward the shaft (102).

14. The lip seal (210) of claim 12 or claim 13, wherein the lip seal is configured to cause small amounts of the buffer fluid to pass between the shaft (102) and at least one of the radial lips (206), thereby lifting the radial lip away from direct contact with the shaft.

## Patentansprüche

1. Kippbare Lippendichtung (210) umfassend:
ein feststehendes Gehäuse (106), das von einer Bohrung durchdrungen ist, die eine längsverlaufende Bohrungsachse (500) hat;
eine drehbare Welle (102), die die genannte Bohrung durchdringt, wobei die genannte drehbare Welle eine längsverlaufende Wellenachse (502) hat;
eine Dichtringanordnung (200), die die Drehwelle (102) koaxial umgibt;
zumindest eine radiale Lippe (206), die sich radial nach innen von der Dichtringanordnung (200) erstreckt und dazu eingerichtet ist, eine Dichtung zwischen der Dichtringanordnung (200) und der Welle (102) zu bilden; und
ein Paar axiale Arme (204, 702), die sich von entgegengesetzten axialen Enden der Dichtringanordnung (200) erstrecken und eine Dichtung zwischen der Dichtringanordnung (200) und dem Gehäuse (106) bilden;
wobei eine radiale Verschiebung der Dichtringanordnung (200) und der radialen Lippen (206) und der axialen Arme (204, 702) von zumindest einem von Biegen der axialen Arme und Gleiten der axialen Arme gegen das Gehäuse (106) ermöglicht wird; und
eine Kompression von Abschnitten der genannten axialen Arme (204, 702) und eine Ausdehnung von entgegengesetzten Abschnitten der genannten axialen Arme der Dichtungsanordnung (200) ermöglichen, mit der Welle (102) koaxial und daran abgedichtet zu bleiben, wenn die Wellenachse (502) zur Bohrungsachse (500) nicht ausgerichtet ist,
**dadurch gekennzeichnet, dass** die genannte Dichtringanordnung (200) eine Vielzahl von Dichtringen (202) umfasst, die aneinander fixiert und abgedichtet sind.

2. Lippendichtung (210) nach Anspruch 1, worin die Dichtringanordnung (200) zwischen einem nächsten Paar ringförmigen radialen Wänden (120) des genannten Gehäuses (106) eingelegt ist, und worin die axialen Arme (204) axiale Lippen (204) sind, die Lippendichtungen mit den radialen Wänden des Gehäuses bilden.

3. Lippendichtung (210) nach Anspruch 2, worin die axialen Lippen (204) in Endringen umfasst sind, die axiale Lippendichtungen sowohl mit der Dichtringanordnung (200) als auch mit den ringförmigen radialen Wänden (120) des Gehäuses (106) bilden.

4. Lippendichtung (210) nach Anspruch 2 oder Anspruch 3, worin die axialen Lippen (204) in abdichtendem Kontakt mit den ringförmigen radialen Wänden (120) des Gehäuses (106) aufgrund der Elastizität der axialen Lippen gehalten werden.

5. Lippendichtung (210) nach einem der Ansprüche 2 - 4, ferner umfassend ein Paar Federn (400), die mit dem Paar axialen Lippen (204) zusammenwirken, und die dazu eingerichtet sind, die axialen Lippen in Kontakt mit den ringförmigen radialen Wänden (120) des Gehäuses (106) zu drücken.

6. Lippendichtung (210) nach Anspruch 5, worin die Federn (400) abgeschrägte Schraubenfedern sind.

7. Lippendichtung (210) nach Anspruch 5, worin die Federn (400) blütenblattähnliche U-förmige Federn sind.

8. Lippendichtung (210) nach Anspruch 1, worin distale Enden (700) der axialen Arme (702) am Gehäuse (106) fixiert sind und am Platz fixiert bleiben, und worin sowohl die radialen Verschiebungen als auch das axiale Kippen der Dichtringanordnung (200) durch das Biegen der axialen Arme angepasst sind.

9. Lippendichtung (210) nach einem der vorhergehenden Ansprüche, worin die axialen Arme (204, 702) axiale Verlängerungen der Dichtringanordnung (200) sind.

10. Lippendichtung (210) nach einem der vorhergehenden Ansprüche, worin jede der radialen Lippen (206) in einem getrennten Lippenmodul (800) ausgebildet ist, wobei jedes von den Lippenmodulen an der Dichtringanordnung (200) getrennt abgedichtet ist.

11. Lippendichtung (210) nach einem der vorhergehenden Ansprüche, worin die zumindest eine radiale Lippe (206) eine Vielzahl von radialen Lippen umfasst.

12. Lippendichtung (210) nach einem der vorhergehenden Ansprüche, ferner umfassend eine Pufferfluidöffnung, die dazu eingerichtet ist, die Einführung eines Pufferfluids in die Lippendichtung zu ermöglichen.

13. Lippendichtung (210) nach Anspruch 12, worin die Lippendichtung dazu eingerichtet ist, zu bewirken, dass ein Druck des Pufferfluids eine radial nach innen gerichtete Kraft, die von zumindest einer der axialen Lippen (204) zur Welle (102) hin angewendet wird, steigen lässt.

14. Lippendichtung (210) nach Anspruch 12 oder Anspruch 13, worin die Lippendichtung dazu eingerichtet ist, zu bewirken, dass kleine Mengen des Pufferfluids zwischen der Welle (102) und zumindest einer der axialen Lippen (206) durchströmen, wodurch die radiale Lippe weg vom direkten Kontakt mit der Welle angehoben wird.

## Revendications

1. Joint (210) à lèvre inclinable comprenant :
un logement (106) fixe traversé par un alésage présentant un axe d'alésage (500) longitudinal ;
un arbre (102) rotatif traversant ledit alésage, ledit arbre rotatif présentant un axe d'arbre (502) longitudinal ;
un ensemble de bague d'étanchéité (200) entourant coaxialement l'arbre (102) rotatif ;
au moins une lèvre radiale (206) s'étendant radialement vers l'intérieur à partir de l'ensemble de bague d'étanchéité (200) et configurée pour former un joint entre l'ensemble de bague d'étanchéité (200) et l'arbre (102) ; et
une paire de bras axiaux (204, 702) s'étendant à partir d'extrémités axiales opposées de l'ensemble de bague d'étanchéité (200) et formant un joint entre l'ensemble de bague d'étanchéité (200) et le logement (106) ;
le déplacement radial de l'ensemble de bague d'étanchéité (200) et des lèvres radiales (206) et des bras axiaux (204, 702) étant permis par au moins l'un parmi une flexion des bras axiaux et un coulissement des bras axiaux contre le logement (106) ; et
la compression de parties desdits bras axiaux (204, 702) et l'expansion de parties opposées desdits bras axiaux permettant à l'ensemble d'étanchéité (200) de rester coaxial et scellé à l'arbre (102) lorsque l'axe d'arbre (502) n'est pas aligné avec l'axe d'alésage (500),
**caractérisé en ce que** ledit ensemble de bague d'étanchéité (200) comprend une pluralité de bagues d'étanchéité (202) fixées et scellées les unes aux autres.

2. Joint (210) à lèvre selon la revendication 1, dans lequel l'ensemble de bague d'étanchéité (200) est pris en sandwich entre une paire proche de parois radiales annulaires (120) dudit logement (106), et dans lequel les bras axiaux (204) sont des lèvres axiales (204) qui forment des joints à lèvre avec les parois radiales du logement.

3. Joint (210) à lèvre selon la revendication 2, dans lequel les lèvres axiales (204) sont incluses dans des bagues d'extrémité qui forment des joints à lèvre axiaux à la fois avec l'ensemble de bague d'étanchéité (200) et les parois radiales annulaires (120) du logement (106).

4. Joint (210) à lèvre selon la revendication 2 ou la revendication 3, dans lequel les lèvres axiales (204) sont maintenues en contact étanche avec les parois radiales annulaires (120) du logement (106) en raison de l'élasticité des lèvres axiales.

5. Joint (210) à lèvre selon l'une quelconque des revendications 2 à 4, comprenant en outre une paire de ressorts (400) coopérant avec la paire de lèvres axiales (204) et configurés pour presser les lèvres axiales en contact avec les parois radiales annulaires (120) du logement (106).

6. Joint (210) à lèvre selon la revendication 5, dans lequel les ressorts (400) sont des ressorts hélicoïdaux inclinés.

7. Joint (210) à lèvre selon la revendication 5, dans lequel les ressorts (400) sont des ressorts en U pétalisés.

8. Joint (210) à lèvre selon la revendication 1, dans lequel des extrémités distales (700) des bras axiaux (702) sont fixées au logement (106) et restent fixes en place, et dans lequel les déplacements radiaux et l'inclinaison axiale de l'ensemble de bague d'étanchéité (200) sont pris en charge par la flexion des bras axiaux.

9. Joint (210) à lèvre selon l'une quelconque des revendications précédentes, dans lequel les bras axiaux (204, 702) sont des extensions axiales de l'ensemble de bague d'étanchéité (200).

10. Joint (210) à lèvre selon l'une quelconque des revendications précédentes, dans lequel chacune des lèvres radiales (206) est formée dans un module de lèvre séparé (800), chacun des modules de lèvre étant scellé séparément à l'ensemble de bague d'étanchéité (200).

11. Joint (210) à lèvre selon l'une quelconque des revendications précédentes, dans lequel l'au moins une lèvre radiale (206) comprend une pluralité de lèvres radiales.

12. Joint (210) à lèvre selon l'une quelconque des revendications précédentes, comprenant en outre un orifice de fluide tampon configuré pour permettre l'introduction d'un fluide tampon dans le joint à lèvre.

13. Joint (210) à lèvre selon la revendication 12, dans lequel le joint à lèvre est configuré pour amener une pression du fluide tampon à augmenter une force radialement vers l'intérieur appliquée par au moins une des lèvres axiales (204) vers l'arbre (102).

14. Joint (210) à lèvre selon la revendication 12 ou la revendication 13, dans lequel le joint à lèvre est configuré pour amener de petites quantités de fluide tampon à passer entre l'arbre (102) et au moins une des lèvres radiales (206), soulevant ainsi la lèvre radiale en l'éloignant d'un contact direct avec l'arbre.
